# EUROPEAN PATENT APPLICATION

(11) **EP 2 765 509 A1**
(43) Date of publication of application: **13.08.2014**
(21) Application number: 13305155.7
(22) Date of filing: 08.02.2013
(51) Int. Cl.: G06F 9/445

(54) **Method of and request server for providing a preference value for features of an application**

(71) Applicant: Thomson Licensing, 92130 Issy-les-Moulineaux (FR)
(72) Inventor: Eluard, Marc, 35576 Cesson Sévigné (FR); Diehl, Eric, 35576 Cesson-Sevigné (FR); Maetz, Yves, 35576 Cesson Sévigné (FR)
(74) Representative: Huchet, Anne

(57) **Abstract**

An application (111) running on a processing device (110) sends (S315) a request for preference values for features to a request server (120) that analyses (S320) the request and then generates (S330) a request that is sent (S330) to a device (150) storing preference values. The device (150) returns (S340) a response comprising stored preference values for the features. In case the response does not provide values for all the features requested by the application, the request server generates (S350) a further request that is sent (S355) to a further device (130) that returns (S365) a response. The responses are then used to generate (S395) a response that is sent (S397) to the application that uses (S398) the preferences. While the recipients of the requests sent by the request server may vary, it is preferred that the first request is sent to a device storing preferences selected by a third party and that the second request is sent to a device storing user preferences. The invention can provide a way to provide preferences for a plurality of different applications without having to specify the preferences separately for each application, and it can also provide preferences from a plurality of sources.

## Description

### TECHNICAL FIELD

The present invention relates generally to computer software and in particular to personalization of computer software.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In many computer programs, it is possible for a user to personalise the program in different ways, for example by entering preferences such as language, the number of 'hits' to return per page in a search, or at least some of the visual characteristics of an avatar in a computer game. As computer games (also called e.g. video games) are particularly suited for the use of the present invention, these will be used as a non-limitative example, but it is to be understood that the present invention can be used with other kinds of computer programs. It will also be understood that the term "computer" is to be interpreted as a device comprising a processor and thus also covers devices such as game consoles, tablets and smart phones.

Computer games are often represented using virtual worlds. Depending on the type of games, human characters, home furniture, vehicles and so on are used in an attempt to make the virtual world looking like a real world (although not necessarily *the* real world). It is common that the game allows some level of personalization. For example, an avatar that represents the player in the virtual world may be customized to fit the player's preferences when it comes to gender, size, build, hair type and colour, skin colour, nose shape, clothes, accessories and many other elements that may be chosen from a bank of predefined elements. It will be appreciated that this can increase the user experience.

However, for each new game, the user has to define its avatar again and this is also the case when playing the same game on a different device (i.e. on a different computer), unless perhaps if the game is server-based. The personalisation is in a sense made more complicated by the fact that the banks of predefined elements usually differ between two different games.

It will thus be appreciated that there is a need for a solution that assists the user in the personalisation of the game. The present invention provides such a system.

### SUMMARY OF INVENTION

In a first aspect, the invention is directed to a method of providing preference values for a plurality of features of an application being executed on a processing device. A request server receives, from the application, a first request for preference values for the plurality of features; requests, from a plurality of devices storing preference values, preference values for the plurality of features; receives from each device a response, each response respectively comprising a requested preference value stored by the device; generates a response comprising preference values received in the responses received from the devices; and sends to the application the response.

In a first embodiment, the plurality of devices are requested in parallel. It is advantageous that preference values received from one device take precedence over preference values received from other devices when generating the response.

In a second embodiment, the plurality of devices are requested in series and wherein the request server waits a predetermined timeout time for a response to a present request before requesting a next device. It is advantageous that the request server, between receiving a response to the present request and requesting the next device, generates the request by removing requests for preference values for features for which preference values have been received.

In a third embodiment, requests are made using a unified description language.

In a fourth embodiment, requesting comprises at least one of sending a request to a storage device and direct lecture from a storage device.

In a second aspect, the invention is directed to a request server configured to provide preference values for a plurality of features of an application being executed on a processing device. The request server comprises a processor configured to: receive, from the application, a first request for preference values for the plurality of features; request, from a plurality of devices storing preference values, preference values for the plurality of features; receive from each device a response, each response respectively comprising a requested preference value stored by the device; generate a response comprising preference values received in the responses received from the devices; and send to the application the response.

In a first embodiment, the processor is configured to request the plurality of devices in parallel. It is advantageous that the processor is configured to let preference values received from one device take precedence over preference values received from other devices when generating the response.

In a second embodiment, the processor is configured to request the plurality of devices series and to wait a predetermined timeout time for a response to a present request before requesting to a next device. It is advantageous that the processor is configured to generate the request to the next device by removing requests for preference values for features for which preference values have been received.

In a third embodiment, the processor is configured to make the requests using a unified description language.

In a fourth embodiment, the processor is configured to send at least one request to a storage device on the Internet.

In a fifth embodiment, the processor is configured to request by at least one of sending a request to a storage device and direct lecture from a storage device.

### BRIEF DESCRIPTION OF DRAWINGS

Preferred features of the present invention will now be described, by way of non-limiting example, with reference to the accompanying drawings, in which
Figure 1 illustrates a system according to a preferred embodiment of the present invention;
Figure 2 illustrates an example of organisation of feature values in storage devices; and
Figure 3 illustrates an exemplary method of obtaining, by an application game, user preferences.

### DESCRIPTION OF EMBODIMENTS

A main idea of the present application is to have the game interact with a request server that has access to the users' preferences for various features in the game. If the request server returns a suitable preference to a specific query, then this preference is used by the game to personalise the feature; otherwise the game uses a default value. This way, the game can automatically select the values that are the most adapted to a user.

The features that can be personalised are for example graphical assets such as a 2D image (which will be used in the non-limiting example hereinafter) or a 3D model (such as avatar body, clothes and weapons), but may also be music (such as game background music), video (to be displayed on billboards in the game virtual environment), settings (such as the sound volume) or characteristics (such as "strength" or "intelligence") of an avatar.

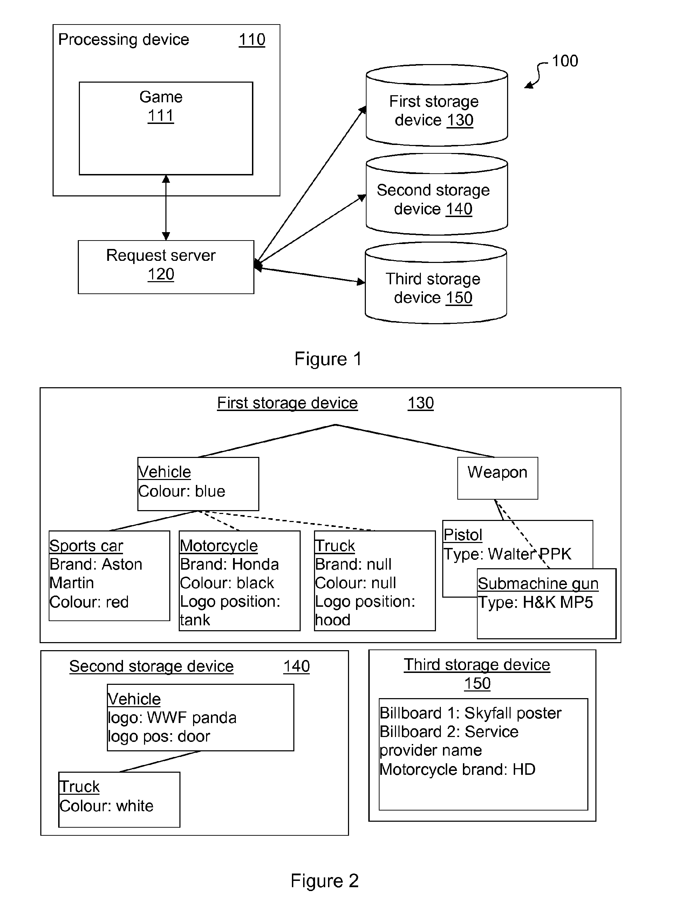

Figure 1 illustrates a system according to a preferred embodiment of the present invention. The system 100 comprises a processing device 110 (e.g. computer, game console, mobile phone or tablet) that executes an application, i.e. the game 111. The system 100 further comprises a request server 120 that has access to a first storage device 130 storing a database with user preferences. The system may also comprise a second storage device 140 storing default values for the game 111 and a third storage device 150 storing further preferences, as described further hereinafter. It will be appreciated that the second storage device 140 and/or the third storage device 150 in some embodiments may be co-located with the first storage device 130 and that the second storage device 140 may also reside within the game 111. The first storage device 130 may be a dedicated, removable hardware device, such as a USB key or a memory card, but it may also be implemented on one or more network devices, e.g. "in the cloud". The request server 120 may be implemented on the processing device 110, but is preferably implemented as a separate device, advantageously on the Internet. Although not explicitly shown in Figure 1, each device has the necessary resources to perform its functions and to communicate with other devices - such as for example at least one processor, memory, user interface(s) and communication interfaces.

It is assumed, for the purposes of the example, that a user has entered at least some user preferences into the first storage device 130. Exactly how the user enters the preferences is beyond the scope of the present invention, but it could for example be done via an explicit application with a user interface in which the user answers a number of questions or selects choices in menus. It could also be done via the application 111 by asking the user each time a choice is made if the user wishes to store the choice as a user preference in the first storage device 130.

The storage devices 130, 140, 150 store the user preferences in a unified description language and at least the first storage device 130 should be available to a plurality of games. The locations of the storage devices 130, 140, 150 are handled by the request server 120, which may obtain location information from the game 111, possibly on input from the user, or from the storage devices 130, 140, 150.

Figure 2 illustrates an example of how values for features may be organised in the storage devices 130, 140, 150. The first storage device 130 stores user preferences, for example using a USB key. The second storage device 140 stores default values defined by the game manufacturer, for example on the game media or on a remote game server. The third storage device 150 stores preferences of a third party such as an Internet service provider, a sponsor or a friend, for example on a remote server for an Internet service provider or a friend's USB key.

The first storage device 130 stores a number of 'themes', such as for example "vehicle", "weapon", "clothes", "pet", and "avatar", of which only the first two are illustrated. On the top level, the colour preference for a generic vehicle is "blue". However, as indicated by the solid line, the user's preference for vehicles is a sports car, with subordinate preferences being that the colour of the sports car is red and the brand is Aston Martin. Further user preferences have been given for motorcycles - black, Honda and a logo, if any, should be put on the tank - and for trucks - no colour preference, but a logo should be put on the hood. As for weapons, the general preference is a Walter PPK, but for submachine guns it's a Heckler & Koch MP5.

The second storage device 140 stores default values for the game. In the example, the generic default values for a vehicle is that a logo is the WWF panda logo and that the position of the logo is on the door of the vehicle. Furthermore, the default colour of a truck is white. These default values are used in the absence of a user preference, which will be the case in the absence of the first storage device 130 and the third storage device, or in the presence of one or both of these storage devices if both lack defined preferences for a requested feature.

The third storage device 150 may for example store feature values selected by the service provider or a third party that has bought commercial space in a virtual world. In the example, the value for a first billboard is a poster for the film "Skyfall", the value for a second billboard is the service provider's name and any motorcycle should be a Harley Davidson.

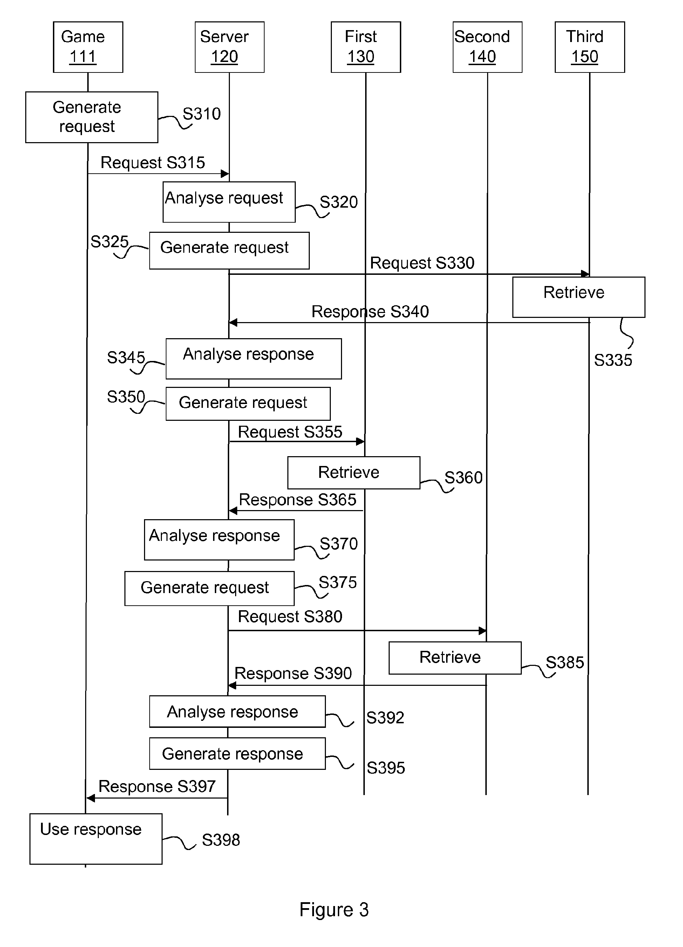

Figure 3 illustrates an exemplary method of obtaining, by the game, feature values for a user. It is preferred that a standardized API is used to request values for predefined features. In step S310, the game 111 generates a request that asks for the user's preferences for a motorcycle (brand, colour, logo and logo position), a billboard and a weapon. In case the request server 120 is located in a separate server, an identity of the user is included in the request. In addition, further information, such as the identity of the Internet service provider used by the processing device 110 or the identity of the game 111 may be included in the request. The request is sent S315 to the request server 120.

The request server 120 analyses S320 the request, for example to extract the identity of the Internet service provider, which may be used to obtain the identity of the third storage device 150. The request server 120 may generate (or forward) the request to each storage device 130, 140, 150; however, in the example, the requests are sent to one storage device at a time. Preferably, the request is generated S325 and first sent S330 to the third storage device 150, especially if its values take precedence over the values in the first and second storage devices 130, 140. It is naturally possible to have different orders for the requests, e.g. first to the first storage device 130, then to the third storage device 150 and finally to the second storage device 140. The order may be fixed or determined by, for example, the request server 120 and the game 111.

The third storage device 150 analyses the request and retrieves S335 any stored values for motorcycle (brand, colour, logo and logo position), a billboard and a weapon. In the present example, the third storage device 150 stores preferences for motorcycle brand, "Harley Davidson," and billboard, a poster for "Skyfall". These values are returned S340 to the request server 120.

The request server 120 may now analyse the request again to delete the received values from it, generate a new request that is sent to the first storage device 130, but it may also use the original request and ignore any values it receives for features for which it has already obtained the values. In the example, the request server 120 analyses S345 the response to in view of the received responses, generates (or updates) S350 the request to "motorcycle (colour, logo, logo position); billboard; weapon" and sends S355 the request to the first storage device 130.

The first storage device retrieves S360 the values for the requested features, "black, null, tank, Walter PPK" and returns S365 the response to the request server 120.

The request server again analyses S370 the response to determine that it still has not received the values for all the features - it still misses the value for 'logo' - and thus generates S375 a request for "motorcycle (logo)" that is sent S380 to the second storage device 140, which retrieves S385 the requested value - "WWF panda logo", possibly with the logo itself - and returns S390 the response to the request server 120. The request server again analyses S392 the response to determine the received values.

Now that the request server 120 has obtained the values for all the requested features, it generates S395 its response "motorcycle (brand=Harley Davidson, colour=black, logo=WWF panda, logo position=tank); billboard=Skyfall poster; weapon=Walter PPK) and sends S397 the response to the application 111, which extracts and uses S398 the received user preferences.

It will be appreciated that the request server 120 preferably returns the values it has received in case it has not obtained values for all the features. It will also be appreciated that the request server 120 can proceed with response generation step S395 if it at any time has received preference values for all the requested features. It should also be noted that the "body" of the requests preferably has a unified format. In addition, timeouts are preferably used to limit the time waiting for responses from devices. The skilled person will appreciate that using no timeouts can be regarded as equivalent to using a timeout set to infinity.

In the embodiment where the second storage device 140 is implemented in the game 111, the request server 120 generates a response with the values obtained from the first storage device 130 and the third storage device 150 and sends this response to the game 111, which then itself obtains any missing, default values.

In the example, the returned preferences have been a description of the preference - e.g. "Harley Davidson" and "black" - or an implementation of the preference - e.g. the WWF panda logo or a compatible 3D model of a Harley Davidson motorcycle. In the former case, the application 111 has to interpret the preference, while it in the latter case can use the preference directly (possibly after some adaptation such as resizing of an image). It will be appreciated that either (or both) is possible in most cases. Thus the preference can be "blue" or RGB value "15, 25, 255". Naturally, if the application 111 for instance has the possibility to offer a plurality of Harley Davidson motorcycles, then it can provide these as a choice for the user (and then possibly return the chosen model as a selected user preference for Harley Davidson motorcycles).

In a variant embodiment, at least one of the storage devices 130, 140, 150 does not have any processing capabilities. A typical example for storage device 140 is a CD-ROM. In this case, the request sent from request server 120 to the storage device is direct lecture from the storage device.

In a variant embodiment, one of the storage devices 130, 140, 150 may further use policies to decide which value to return in response to a request. An example of is a randomization policy that in response to a request for "vehicle" returns "sports car" 70% of the time, "motorcycle" 20% of the time, and "truck" 10% of the time. It will be appreciated that this can provide some variation, while generally adhering to the user's preferences. Furthermore, this could be extended to more than one storage device.

Another variant embodiment is an inference policy that can be used to calculate missing values. Inference can be top down or bottom up. In the first case, for instance using the example of figure 2, the "truck" has no colour defined, but as "vehicle" has one, the "truck" could take the same value. In the second case, for instance, supposing the preferred colour of "sports car", "motorcycle", and "truck" is "black", the "vehicle" could take the same value. It is also possible to pick one of the values at random in case the colour preferences for "sports car", "motorcycle", and "truck" are different. The skilled person will appreciate that a user's preferences may be updated at practically any time, for example through the use of a dedicated application that allows the user to choose preference values, but it may also be updated via the game (preferably after user confirmation) whenever the user selects an option in the game.

It will be appreciated that values provided by the e.g. the inference policy or the third storage device 150 may be used to modify the values in the first storage device 130, not only in case the latter has no value set for a preference, but also to update values to more recent values (e.g. to a film that has a later release date than the one that is stored).

It will also be appreciated that it is preferred to use some kind of authentication protocol to ensure that only a game authorized by the user can retrieve the user preferences in the first storage device 130. The art abounds with suitable protocols that may be used to this end, so one will not be described herein.

The skilled person will appreciate that the present invention can provide a solution that enables automatic personalization of a game and that the same personalization can be obtained by different games running on different devices.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of providing preference values for a plurality of features of an application (111) being executed on a processing device (110), the method comprising the steps, at a request server (120) comprising a processor, of:
receiving (S315), from the application (111), a first request for preference values for the plurality of features;
requesting (S330, S355, S380), from a plurality of devices (130, 140, 150) storing preference values, preference values for the plurality of features;
receiving (S340, S365, S390) from each device (130, 140, 150) a response, each response respectively comprising a requested preference value stored by the device;
generating (S395) a response comprising preference values received in the responses received from the devices; and
sending (S397) to the application (111) the response.

2. The method of claim 1, wherein the plurality of devices are requested in parallel.

3. The method of claim 2, wherein preference values received from one device take precedence over preference values received from other devices when generating the response.

4. The method of claim 1, wherein the plurality of devices are requested in series and wherein the request server waits a predetermined timeout time for a response to a present request before requesting a next device.

5. The method of claim 4, further comprising, between the steps of receiving a response to the present request and requesting the next device, the step of generating (S350, S375) the request by removing requests for preference values for features for which preference values have been received.

6. The method of claim 1, wherein requests are made using a unified description language.

7. The method of claim 1, wherein the requesting step comprises at least one of sending a request to a storage device and direct lecture from a storage device.

8. A request server (120) configured to provide preference values for a plurality of features of an application (111) being executed on a processing device (110), the request server (120) comprising a processor configured to:
receive, from the application (111), a first request for preference values for the plurality of features;
request, from a plurality of devices (130, 140, 150) storing preference values, preference values for the plurality of features;
receive from each device (130, 140, 150) a response, each response respectively comprising a requested preference value stored by the device;
generate a response comprising preference values received in the responses received from the devices; and
send to the application (111) the response.

9. The request server of claim 8, wherein the processor is configured to request the plurality of devices in parallel.

10. The request server of claim 9, wherein the processor is configured to let preference values received from one device take precedence over preference values received from other devices when generating the response.

11. The request server of claim 8, wherein the processor is configured to request the plurality of devices series and to wait a predetermined timeout time for a response to a present request before requesting to a next device.

12. The request server of claim 11, wherein the processor is configured to generate the request to the next device by removing requests for preference values for features for which preference values have been received.

13. The request server of claim 8, wherein the processor is configured to make the requests using a unified description language.

14. The request server of claim 8, wherein the processor is configured to send at least one request to a storage device on the Internet.

15. The request server of claim 8, wherein the processor is configured to request by at least one of sending a request to a storage device and direct lecture from a storage device.
